Europäisches Patentamt

European Patent Office

Office européen des brevets

(11) Veröffentlichungsnummer: **0 220 687**
B1

(12) **EUROPÄISCHE PATENTSCHRIFT**

(45) Veröffentlichungstag der Patentschrift:
10.01.90

(51) Int. Cl.⁴: **B25J 11/00**, B05B 13/00

(21) Anmeldenummer: 86114752.8

(22) Anmeldetag: 23.10.86

(54) Verfahren und Vorrichtung zum Öffnen und/oder Schliessen von Hauben an Kraftfahrzeugkarossen.

(30) Priorität: 29.10.85 DE 3538468

(43) Veröffentlichungstag der Anmeldung:
06.05.87 Patentblatt 87/19

(45) Bekanntmachung des Hinweises auf die Patenterteilung:
10.01.90 Patentblatt 90/2

(84) Benannte Vertragsstaaten:
DE FR GB IT SE

(56) Entgegenhaltungen:
EP-A- 0 160 407
WO-A-84/00318
DD-A- 238 764
DE-A- 3 301 022
GB-A- 2 152 882
US-A- 3 272 347
US-A- 4 342 535

(73) Patentinhaber: Bayerische Motoren Werke
Aktiengesellschaft, Patentabteilung
AJ-3 Postfach 40 02 40 Petuelring 130,
D-8000 München 40(DE)

(72) Erfinder: Bellinghausen, Karl-Heinz,
Denninger-Strasse 200, D-8000 München 81(DE)
Erfinder: Katzlinger, Peter, Jagdfeldring 30,
D-8013 Haar(DE)
Erfinder: Mardeis, Ernst, Brunnenstrasse 29,
D-8011 Baldham(DE)

(74) Vertreter: Schweiger, Erwin, c/o Bayerische Motoren
Werke AG - AJ-35 Postfach 40 02 40 Petuelring 130,
D-8000 München 40(DE)

## Beschreibung

Die Erfindung bezieht sich auf ein Verfahren der im Oberbegriff des ersten Anspruchs angegebenen Art sowie auf eine Vorrichtung zur Durchführung des Verfahrens, wie es der Oberbegriff des Anspruchs 3 beschreibt.

Beim Lackieren von Kraftfahrzeugkarosserien ist es bekannt, Spritzroboter zur Innen- und Außenlackierung einzusetzen. Hierbei ist es notwendig, daß nach erfolgter Außenlackierung die von den Hauben verschlossenen Innenräume geöffnet werden müssen. Bisher wurde dies von Hand durchgeführt, indem ein Werker die von einem Anschlagstift gehaltene spaltbreit geöffnete Klappe von Hand öffnete.

Aus der GB-A 2 152 882 ist eine Vorrichtung ausschließlich zum Schließen von Hauben an Kraftfahrzeugen bekannt. Diese Hauben werden im geöffneten Zustand durch Führungsfinger der oberen Transporteinrichtung der Kraftfahrzeugkarosserie aufgehalten. Ein Öffnen von nahezu geschlossenen Hauben an Kraftfahrzeugkarosserien ist daraus nicht bekannt. Weiterhin wird die hieraus bekannte Handlingeinrichtung über Kupplungsmittel von der Transporteinrichtung für die Kraftfahrzeugkarosserie mitgeschleppt. Dies hat den Nachteil, daß bei einem Klemmen der Handlingeinrichtung in ihrer Führung diese sich sprunghaft bewegt. Dadurch kommt es zu Relativbewegungen zwischen den Berührungsfingern der Handlingeinrichtung und der Karosse, was zu Beschädigungen führt. Nachdem die bekannte Handlingeinrichtung die geöffneten Hauben geschlossen hat, werden die Kupplungsmittel gelöst und die Handlingeinrichtung wird von einem separaten Antrieb in ihre Ausgangslage zurückgefahren.

Aufgabe der vorliegenden Erfindung ist es, dieses Öffnen und nach dem Innenlackieren notwendige Schließen der Hauben während des Verfahrens der Kraftfahrzeugkarosserie automatisch durchzuführen.

Gelöst wird diese Aufgabe durch die Merkmale des ersten Anspruchs. Vorteilhaft hierbei ist, daß nunmehr vollautomatisch ohne Zuhilfenahme eines Werkers sowohl Front- wie Heckklappe eines Kraftfahrzeuges in der Lackierstraße geöffnet und geschlossen werden können. Damit kann eine vollautomatisch arbeitende Lackieranlage aufgebaut werden, da das automatische Öffnen und Schließen der Türen bereits bekannt ist. Durch das erfindungsgemäße Verfahren ist sichergestellt, daß eine Beschädigung der Kraftfahrzeugkarosserie ausgeschlossen ist, da durch die Synchronisierung der Bewegung der Karosserie und des Handlinggerätes Relativbewegungen nicht auftreten. Durch die verfahrbare Anordnung der Handlingeinrichtung wird der Vorteil erzielt, daß das Öffnen/Schließen der Haube während des Transports der Karosse von einer Arbeitsstation zur anderen durchgeführt werden kann. Hierdurch wird keine zusätzliche Bearbeitungszeit benötigt.

Das Synchronisieren der beiden Geschwindigkeiten wird auf besonders einfache und vorteilhafte Weise dadurch erzielt, daß die Handlingeinrichtung über ihren Anschlag gegen einen an der Transporteinrichtung oder der Traverse oder der Kraftfahrzeugkarosserie angeordneten Gegenanschlag kraftschlüssig gefahren wird, ist die Synchronisierung der Bewegungen gesichert.

Die Merkmale des Anspruchs 2 stellen eine zusätzliche Sicherheitseinrichtung dar, da hierdurch vermieden wird, daß die Aufnahmeeinrichtung die zu betätigende Haube nicht erfaßt. Zudem ist hierdurch eine Höhenverstellung der Handlingeinrichtung nicht notwendig, da bei einer aus dem Sollbereich abweichenden Höhenlage die Handlingeinrichtung nicht tätig wird.

Anspruch 3 beschreibt eine Vorrichtung zur Durchführung des erfindungsgemäßen Verfahrens. Diese Vorrichtung zeichnet sich insbesondere dadurch aus, daß sie seitlich neben der Transporteinrichtung der Karosserie angeordnet werden kann, so daß während des Transportes der Karosserie keine Verzögerung auftritt. Das Öffnen und Schließen der Hauben kann vielmehr während des Transportes durchgeführt werden. Durch die drehbare Lagerung des Schwenkarmes sowie die verschwenkbare Lagerung des Betätigungsarmes wird erreicht, daß die Handlingeinrichtung schmalbauend aufgebaut werden kann, da durch die Drehbewegungen und Verschwenkbewegungen der Greifer zum Betätigen der Haube in den Verfahrweg der Karosserie eingeschwenkt bzw. gedreht werden kann.

Weiterhin ist eine einfache Kontrollmöglichkeit gegeben, wenn die Haube vollständig geöffnet oder geschlossen wird. Denn dann ist die Haube nicht mehr weiterverschwenkbar und der Betätigungsarm wird bei einer weiteren Verschwenkbewegung gekippt. Zudem wird dadurch sichergestellt, daß die Greifeinrichtung der Handlingeinrichtung die Haube nicht zu früh losläßt, so daß die Haube in einer undefinierten Lage stehenbleibt.

Die Weiterbildung nach Anspruch 4 beschreibt eine vorteilhafte Führung für die Handlingeinrichtung. Die Geradführung ist wiederum in einem Gestell gehalten, welches fest mit dem Boden oder mit Seitenwänden der Werkshalle verbunden ist.

Die Weiterbildung nach Anspruch 5 beschreibt vorteilhafte Anordnungen der einzelnen Achsen. Hierdurch wird bei kleinstmöglichem Bauraum eine größtmögliche Bewegungsfläche der Handlingeinrichtung erzielt.

Die Weiterbildung nach Anspruch 6 hat den Vorteil, daß beim Verschwenken der Haube keine Relativbewegung zwischen der Greifeinrichtung und der Aufnahmeeinrichtung an der Haube stattfindet, so daß hierdurch sicher vermieden wird, daß die Greifeinrichtung aus der Aufnahmeeinrichtung herausspringt bzw. hebelt. Beschädigungen der zu betätigenden Hauben sind damit ausgeschlossen.

Eine hiermit besonders gut harmonierende Aufnahmeeinrichtung beschreibt Anspruch 7. Hierdurch wird auf einfache Art und Weise die Betätigung der Haube möglich, ohne daß die lackierte bzw. zu lackierenden Flächen berührt werden müssen.

Mit der Weiterbildung nach Anspruch 8 läßt sich zum einen feststellen, ob überhaupt eine Karosse vorhanden ist und gleichzeitig eine Abfrage ihrer Höhenlage durchführen. Ebenso kann durch ein Verschwenken in Gegenrichtung festgestellt werden, daß die Synchronisierung der beiden Geschwindigkeiten erfolgt ist.

Um zu verhindern, daß die Handlingeinrichtung ruckartige Bewegungen ausführt, so daß es während des Betätigens der Haube zu Relativbewegungen zwischen Handlingeinrichtung und Haube kommt, wird die Weiterbildung nach Anspruch 10 vorgeschlagen.

Eine umweltfreundliche und in explosionsgefährdeten Räumen gut anzuwendende Antriebseinrichtung für die Handlingeinrichtung beschreibt Anspruch 11.

Im folgenden wird die Erfindung anhand eines bevorzugten Ausführungsbeispiels näher dargestellt.

Es stellen dar:

Fig. 1 eine Seitenansicht einer erfindungsgemäß aufgebauten Handlingeinrichtung;

Fig. 2a, b eine Draufsicht auf die Handlingeinrichtung in Ruhestellung und in Arbeitsstellung;

Fig. 3a, b Seitenansichten nach Fig. 2a, b;

Fig. 4a–c Einzelheiten des Synchronisiervorganges zwischen den Geschwindigkeiten der Transporteinrichtung und der Handlingeinrichtung;

Fig. 5a, b Seiten- und Draufsicht auf die Greifeinrichtung beim Öffnen einer Kofferraumhaube eines Kraftfahrzeuges;

Fig. 6a, b Seiten- und Draufsichten auf die Greifeinrichtung beim Öffnen einer Motorhaube eines Kraftfahrzeuges.

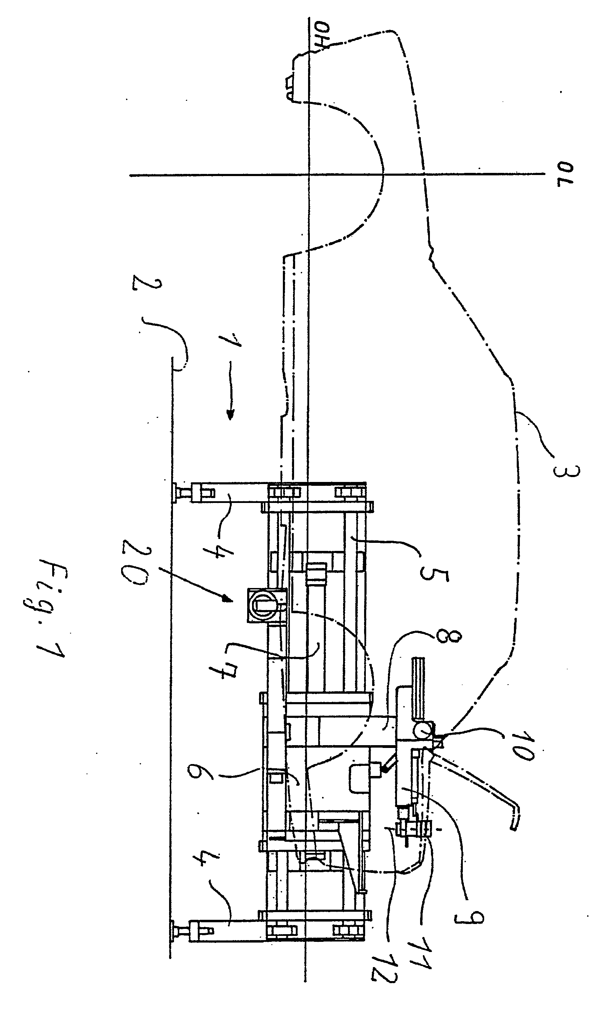

In Fig. 1 ist die erfindungsgemäße Handlingeinrichtung mit 1 bezeichnet. Sie steht auf dem Boden 2 einer nicht weiter dargestellten Werkhalle. In strichpunktierten Linien ist weiterhin eine Kraftfahrzeugkarosse 3 dargestellt. Diese Karosse 3 wird auf einer auf dem Boden 2 angeordneten, hier nicht näher dargestellten Transporteinrichtung verfahren. Zwischen Transporteinrichtung und Karosse 3 ist eine ebenfalls nicht dargestellte Montagetraverse vorhanden, auf der die Karosse starr befestigt ist.

Die Handlingeinrichtung 1 weist einen Rahmen 4 auf, der auf dem Werkhallenboden 2 aufgestellt ist. In dem Rahmen 4 sind zwei Geradführungen 5, die parallel zueinander angeordnet sind, gelagert. Von dieser Geradführung 5 wird ein Schlitten 6 geführt. Verfahren wird der Schlitten 6 von einer an dem Rahmen 4 angeordneten Zylinder-Kolben-Einheit 7.

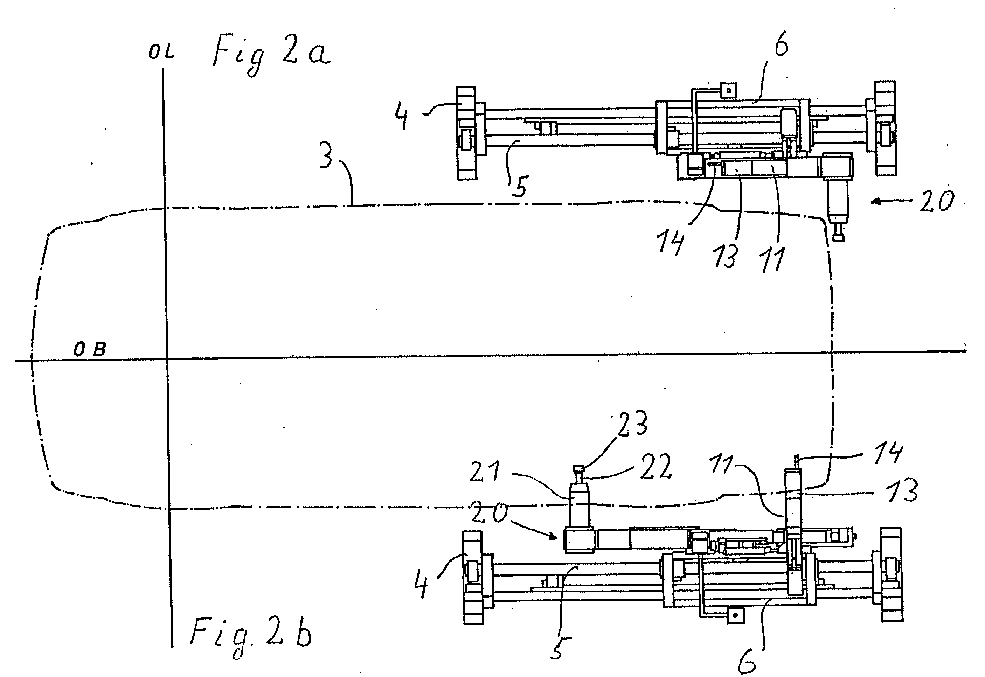

Auf dem oberen Ende des Schlittens 6 ist an einer Trageinrichtung 8 der Schwenkarm 9 drehbar gelagert. Seine Drehachse 10 ist horizontal ausgerichtet, und zwar derart, daß sie in der Verlängerung der Drehachse der zu betätigenden Haube liegt. Das vordere freie Ende des Schwenkarmes 9 trägt den Betätigungsarm 11, welcher um eine vertikal angeordnete Schwenkachse 12 verschwenkbar ist. Das vordere freie Ende des Betätigungsarmes 11 trägt die Greifeinrichtung 13 (Fig. 2a, b).

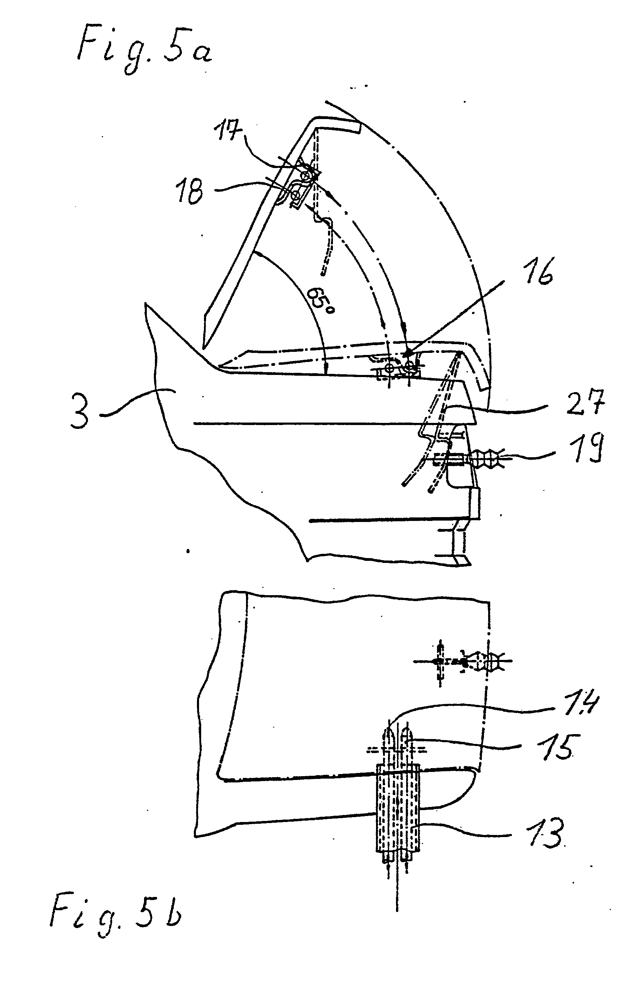

Die Greifeinrichtung 13 weist an ihrem vorderen freien Ende einen Suchbolzen 14 auf, der ortsfest angeordnet ist. Parallel zu ihm ist ein axial verfahrbar angeordneter Betätigungsbolzen 15 vorgesehen (Fig. 5).

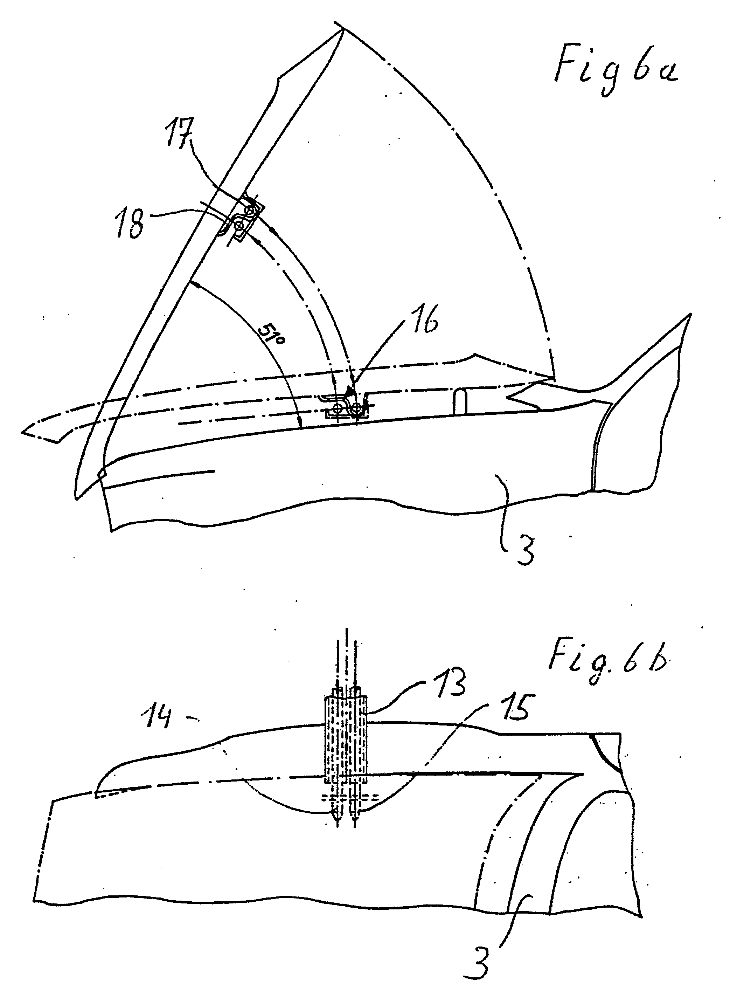

Beide Bolzen 14, 15 arbeiten in einer weiter unten näher beschriebenen Art mit einer auf der Innenseite der zu betätigenden Haube angeordneten Aufnahmeeinrichtung 16 zusammen. Diese besteht aus einer Öse 17 für den Bolzen 15 und einem sich daran anschließenden Anschlagbügel 18 für den Bolzen 14 (Fig. 5, 6).

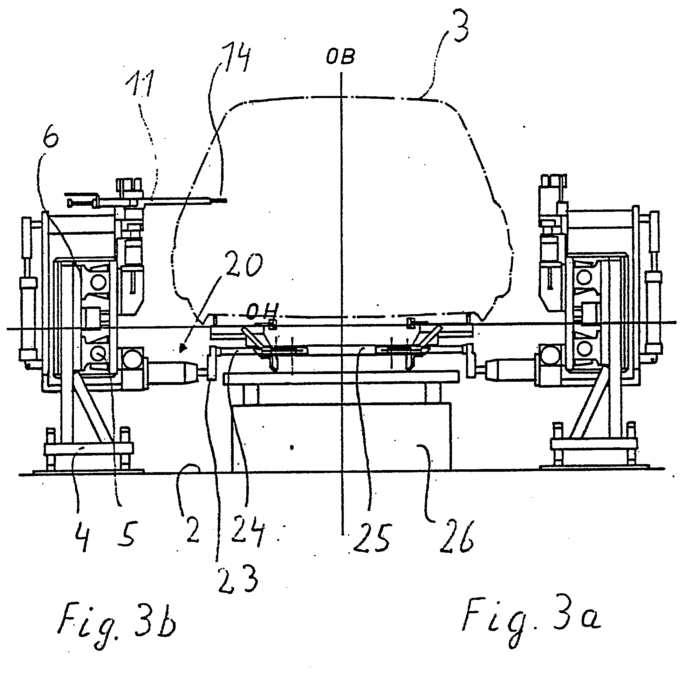

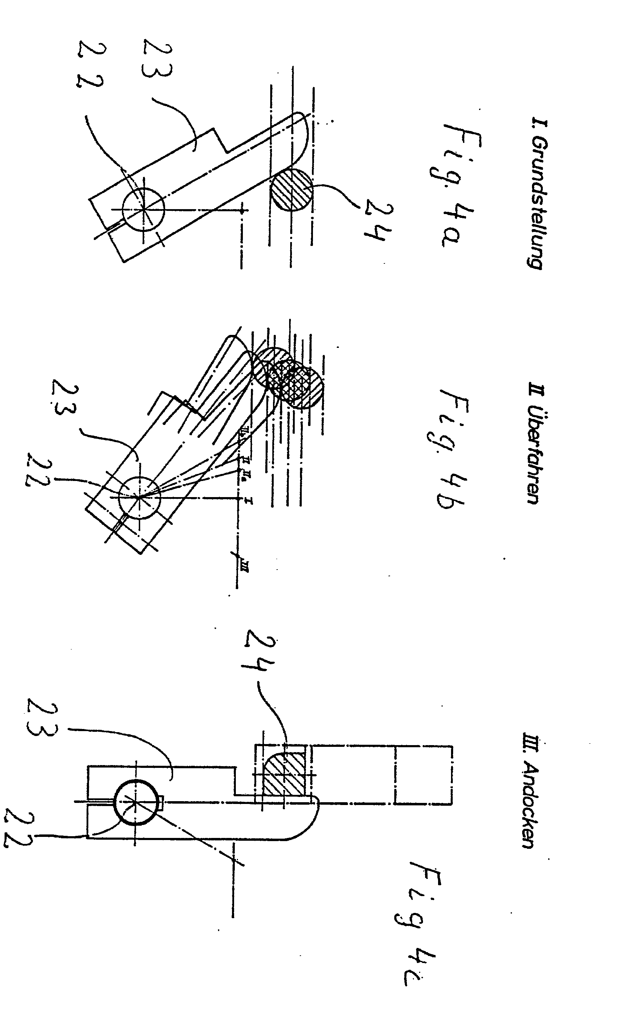

Am unteren Ende des Schlittens 6 ist die Andockeinheit 20 angeordnet. Sie besteht aus einem auskragend unter die Karosse 3 ragenden Arm 21, welcher an seinem vorderen freien Ende einen um die Achse 22 drehbar gelagerten Hebel 23 trägt. Dieser Hebel 23 arbeitet mit einem an der Traverse angeordneten Gegenanschlag 24 (Fig. 3, 4) zusammen.

In Fig. 2a ist in der Draufsicht die in Ruhestellung befindliche Handlingeinrichtung 1 dargestellt. Sie eignet sich zum Öffnen und Schließen von vorne angeschlagenen Motorhauben.

In Fig. 2b ist die Handlingeinrichtung 1 dargestellt, welche zum Öffnen und Schließen von Kofferraumhauben geeignet ist. Die in beiden Abbildungen dargestellten Handlingeinrichtungen unterscheiden sich nur durch die Lage der Andockeinheit 20. Die Funktion der beiden in Fig. 2a, b dargestellten Einrichtungen ist identisch und wird weiter hinten beschrieben.

In Fig. 3 a, b ist eine Seitenansicht der Darstellung nach Fig. 2a, b dargestellt. Hier sieht man auch die Montagetraverse 25, die von der Transporteinrichtung 26 getragen und bewegt wird. An der Traverse 25 ist ein seitlich in Richtung auf die Handlingeinrichtung 1 herausragender Gegenanschlag 24 fest angeordnet.

Im folgenden wird die Erfindung unter Zuhilfenahme der Fig. 4 - 6 näher beschrieben.

Vorraussetzung zum ordnungsgemäßem Arbeiten der Handlingeinrichtung 1 ist, daß eine Karosse 3 auf einer Traverse 25 montiert ist, die mit einem Gegenanschlag 24 ausgerüstet ist, daß auf der Innenseite der Haube die Aufnahmeeinrichtung 16 im Greifbereich der Greifeinrichtung 13 angeordnet ist und daß die Haube mit einem geeigneten rastbaren Feststeller 27 (Fig. 5) und Anschlag ausgerüstet ist, die verhindern, daß die Haube sowohl vollständig geschlossen wird als auch nur in Öffnungsstellung stehen bleibt, wenn sie durch Federkraft selbsttätig ohne Feststeller in die Öffnungsstellung verschwenken würde.

Die Traverse wird von der Transporteinrichtung an der seitlich angeordneten Handlingeinrichtung vorbeibewegt. Beim Vorbeifahren lenkt nun der Gegenanschlag 24 den Hebel 23 aus der in Fig. 4a gezeigten Grundstellung aus. Je nach Höhenlage des Gegenanschlages wird die Auslenkung des Hebels 23 größer oder kleiner ausfallen (Fig. 4b). Dieses Verdrehen des Hebels wird von einer Meßeinrichtung erfaßt. Liegt der Verdrehwinkel in einem vorgegebenen Sollwertbereich, so weiß die Handlingeinrichtung 1, daß die Karosse in der richtigen Höhenlage angeliefert wurde, da die Verbindung Karosse Traverse fest ist. Nach Überfahren des Hebels 23 wird dieser wieder in seine Ausgangslage (Fig. 4a) zurückgeschwenkt. Dadurch erhält die Zylinder-Kolben-Einheit 7 Druckluft und der Schlitten 6 fährt der voreilenden Karosse nach. Da seine Geschwindigkeit größer ist als die Geschwindigkeit der Transporteinrichtung 26, holt er die Karosse 3 ein. Am Überholen der Karosse 3 wird der Schlitten dadurch gehindert, daß der Hebel 23 gegen einen an der Traverse 25 angeordneten ortsfesten Anschlag fährt, der auch der Gegenanschlag 24 sein kann (Fig. 4a). Hierdurch wird der Hebel 23 entgegen der ersten Drehrichtung senkrecht gestellt (Fig. 4c). Durch dieses Verdrehen wird der Meßeinrichtung signalisiert, daß der Schlitten die Traverse erreicht hat. Da der Antrieb des Schlittens 6 eingeschaltet bleibt, folgt er kraftschlüssig der Karosse 3.

Gleichzeitig wird nach diesem Synchronisieren der beiden Verfahrgeschwindigkeiten der Betätigungsarm 11 um 90° in Richtung auf die Karosse verschwenkt. Da in jedem Fall die zu betätigende Haube nicht vollständig geschlossen ist, - entweder ist sie geöffnet oder wird von dem Feststeller 27 bzw. Anschlag spaltbreit geöffnet gehalten - kann dadurch der Betätigungsarm mit dem Suchbolzen 14 in den Spalt zwischen der Haube und der Karosse einfahren (Fig. 6).

Danach wird der Schwenkarm 9 verdreht. Die Handlingeinrichtung 1 ist derart aufgebaut, daß die Drehachse 10 in der Verlängerung der Drehachsen der zu betätigenden Haube liegt. Dadurch wird sicher vermieden, daß keine Relativbewegung beim Betätigen der Haube zwischen der Haube und der Greifeinrichtung 13 auftritt.

Sobald durch die Drehbewegung des Schwenkarmes 9 der Suchbolzen 14 gegen den Anschlagbügel 17 stößt, nickt der Betätigungsarm 11 nach unten aus. Dieses Ausnicken wird dadurch unterstützt, daß die entweder voll geöffnete Haube nicht weiter öffnen kann aufgrund ihrer Anlenkpunkte oder bei nur spaltweise geöffneter Haube die Haube in dieser Stellung durch den Feststeller gehalten wird.

Sobald der Betätigungsarm 11 ausgenickt wurde, wird der zweite Bolzen, nähmlich der Betätigungsbolzen 15 ausgefahren. Dieser greift in die Öse 17 der Aufnahmeeinrichtung 16 ein. Aufgrund des bis zum Ausnicken zurückgelegten Verdrehwinkels des Schwenkarmes weiß die Steuereinrichtung der Handlingeinrichtung 1, ob die Haube zu öffnen oder zu schließen ist.

Ist die zu betätigende Haube vollkommen geöffnet, so schwenkt nun der Schwenkarm 9 zurück in Schließrichtung der Haube. Sobald die Haube bis auf einen Spalt geschlossen ist, läßt sie sich aufgrund des Anschlages nicht weiter schließen. Die Drehbewegung des Schwenkarmes 9 wird dadurch gestoppt und zur Kontrolle, ob der Feststeller die Haube auch in der Endlage hält, wird die Drehrichtung des Schwenkarmes 9 nochmals umgedreht im Öffnungssinne. Da die Haube aber auch durch den Feststeller 27 arretiert ist, oder aufgrund ihres Gewichtes nicht aus ihrer Ruhelage gebracht werden kann, nickt der Betätigungsarm 11 wieder aus. Hierdurch weiß die Handlingeinrichtung 1, daß die Haube ihre vorgegebene Endlage erreicht hat. Sodann wird der Betätigungsbolzen 15 zurückgefahren und der Betätigungsarm 11 zurückgeschwenkt. Das Erreichen seiner Ausgangslage wird über entsprechende Meßeinrichtungen erfaßt. Sobald diese Signale vorliegen, wird der Antrieb des Schlittens 6 abgeschaltet und der Schlitten zurück in seine Ausgangslage verfahren. Anschließend kann ein neuer Arbeitszyklus durchgeführt werden.

Ist die zu betätigende Haube anfangs bis auf einen Spalt geschlossen und in dieser Position von dem Feststeller gegen Öffnen gesichert (durch die Federwirkung selbsttätig öffnende Haube), so muß - sobald der Suchbolzen 14 und der Betätigungsbolzen 15 in die Aufnahmeeinrichtung 16 angreifen - durch einen weiteren Mechanismus - beispielsweise einen zusätzlichen Arm 19 (Fig. 5) - der Feststeller gelöst werden (Fig. 5a). Sodann wird auch hier der Schwenkarm 9 verdreht. Sobald die Haube in ihre geöffnete Position gelangt ist, wird durch das Weiterdrehen des Schwenkarmes 9 der Betätigungsarm 11 wieder ausgenickt. Hierdurch weiß die Handlingeinrichtung 1, daß die Haube ihre Endlage erreicht hat. Sodann wird wieder der Betätigungsbolzen 15 zurückgezogen, der Betätigungsarm 11 in die Ausgangslage zurückgedreht. Unter gleichzeitigem Zurückdrehen des Schwenkarmes 9 in seine horizontale Ruhestellung wird der Schlitten zurückgefahren in seine Ausgangstellung. Sodann ist er ebenfalls wieder bereit für einen neuen Arbeitszyklus.

## Patentansprüche

1. Verfahren zum Bewegen von Hauben an Kraftfahrzeugkarosserien (3), die auf einer Transporteinrichtung (26) angeordnet sind und von dieser entlang einer festgelegten Bewegungsbahn gefahren werden, insbesondere durch Lackierstraßen, wobei die Hauben bei den herangeführten Karosserien gegen vollständiges Schließen gesichert sind und bei dem zum Bewegen der Hauben eine außerhalb der Transporteinrichtung angeordnete Handlingeinrichtung (1) parallel zur Transporteinrichtung angetrieben wird, wobei die Handlingeinrichtung nach Beendigung der Verschwenkbewegung der Hauben in ihre Ausgangslage zurückgefahren wird, dadurch gekennzeichnet, daß die Handlingeinrichtung mit einer höheren Geschwindigkeit als die Transporteinrichtung über einen separaten Antrieb verfahren wird, daß zum Synchronisieren der Geschwindigkeiten von Transporteinrichtung und Handlingeinrichtung Anschläge (23) und Gegenanschläge (24) vorgesehen sind, die ein Überholen der Karosserie von der Handlingeinrichtung verhindern, daß nach dem Synchronisieren die Stellung der Haube abgefragt und anschließend die Haube erfaßt und nach evtl. Lösen des Feststellers in ihre andere Endlage verschwenkt wird.

2. Verfahren nach Anspruch 1, dadurch gekennzeichnet, daß vor dem Synchronisieren der Geschwindigkeiten die Höhenlage der auf der Transporteinrichtung (26) herangeführten Karosserie (3) erfaßt wird.

3. Vorrichtung zum Öffnen und/oder Schließen von Hauben an Kraftfahrzeugkarosserien (3) die auf einer Traverse befestigt sind, die kontinuierlich von einer Transporteinrichtung bewegt wird, wobei die Hauben durch Anschläge (27) gegen vollständiges Schließen blockiert sind, mit einer außerhalb der Bewegungsbahn der Kraftfahrzeugkarosserie (3) verfahrbar angeordneten Handlingeinrichtung (1), deren Verfahrweg parallel zu der Bewegungsbahn verläuft, wobei die Handlingeinrichtung (1) einen drehbar gelagerten Schwenkarm (9) trägt, an dessen freien Ende ein verschwenkbar gelagerter Betätigungsarm (11) vorgesehen ist, an dessen freien Ende Halteeinrichtungen (Greifeinrichtung 13) vorgesehen sind, dadurch gekennzeichnet, daß die Handlingeinrichtung (1) einen vom Antrieb der Transporteinrichtung (26) unabhängigen Antrieb aufweist, der über einen Anschlag (Hebel 23) und Gegenanschlag (24) in seiner Verfahrgeschwindigkeit der Geschwindigkeit der Transporteinrichtung (26) angepaßt ist, daß der Betätigungsarm (11) in Längsrichtung kippbar gelagert ist und als Halteeinrichtung zwei Bolzen (14, 15) aufweist, von denen zumindest einer längsverfahrbar ist und die mit einer an der Haube angeordneten Aufnahmeeinrichtung zusammenwirken.

4. Vorrichtung nach Anspruch 3, dadurch gekennzeichnet, daß die Handlingeinrichtung (1) aus einem in einer Geradführung (5) verfahrbar angeordneten Schlitten (6) besteht.

5. Vorrichtung nach Anspruch 3 oder 4, dadurch gekennzeichnet, daß der Schwenkarm (9) um eine horizontale Achse (10) drehbar gelagert ist und der Verdrehweg erfaßbar ist, daß der Betätigungsarm (11) um eine vertikale Achse (12) drehbar gelagert ist.

6. Vorrichtung nach einem der Ansprüche 3 bis 5, dadurch gekennzeichnet, daß die Drehachse (10) des Schwenkarmes (9) in der Verlängerung der Drehachsen der zu betätigenden Haube liegt.

7. Vorrichtung nach einem der vorangegangenen Ansprüche, dadurch gekennzeichnet, daß die Aufnahmeeinrichtung (16) aus einer Öse (17) mit einem Anschlagbügel (18) besteht, die mit den verschiebbar gelagerten Bolzen (14, 15) zusammenwirken.

8. Vorrichtung nach einem der vorangegangenen Ansprüche, dadurch gekennzeichnet, daß der Anschlag (Hebel 23) aus einem um eine horizontale Achse (22) verschwenkbar gelagerten Hebel (23) besteht, dessen Ausgangsstellung in einer zur Bewegungsrichtung der Karosserie nahezu senkrechten Ebenen liegt.

9. Vorrichtung nach Anspruch 8, dadurch gekennzeichnet, daß der Verschwenkwinkel des Hebels (23) von einer Steuereinrichtung erfaßbar ist.

10. Vorrichtung nach einem der vorangegangenen Ansprüche, dadurch gekennzeichnet, daß der Antrieb der Handlingeinrichtung (1) eine höhere Geschwindigkeit als der der Transporteinrichtung (26) aufweist.

11. Vorrichtung nach einem der vorangegangenen Ansprüche, dadurch gekennzeichnet, daß der Antrieb eine pneumatisch antreibbare Zylinder-Kolben-Einheit (7) ist.

## Claims

1. A method of moving the bonnets on car bodies (3) disposed on a conveyor (26) and movable thereby along a fixed track, more particularly through varnishing stations, the bonnets on the moved-along bodies being prevented from completely closing, and a handling device (1) for moving the bonnets being disposed outside the conveyor and driven parallel to the conveying direction, the handling device being returned to its starting position after pivoting the bonnets, characterised in that the handling device is driven by a separate drive and at a higher speed than the conveyor, abutments (23) and counter-abutments (24) are provided for synchronising the speeds of the conveyor and the handling device and prevent the handling device overtaking the body, and, after synchronisation, the position of the bonnet is scanned and the bonnet is subsequently detected and pivoted into its other end position, after releasing the shift lock if necessary.

2. A method according to claim 1, characterised in that, before the speeds are synchronised, the vertical position of the body (3) moved up on the conveyor (26) is detected.

3. A means for opening and/or closing the bonnets on vehicle bodies (3) secured to a cross-member which is continuously moved by a conveyor, the bonnet being prevented by abutments (27) from complete closing, the means comprising a handling device (1) movable along the same path as the vehicle body (3), the distance travelled by the handling device extending parallel to the path of the vehicle bodies, the handling device (1) carrying a rotatably-mounted swivel arm (9) having a pivotably-mounted actuating arm (11) at its free end, and holding means (gripper 13) being provided at the free end of the actuating arm, characterising in that the handling device (1) has a drive independent of the drive of the conveyor (26) and adapted via an abutment (lever 23) and counter-abutment (24) to the speed of the conveyor (26), and the actuating arm (11) is mounted for tilting in the longitudinal direction and has a holding device in the form of two pins (14, 15), at least one of which is longitudinally movable, and the pins cooperate with a receiving device disposed on the bonnet.

4. A means according to claim 3, characterised in that the handling device (1) comprises a slide (6) mounted for movement in a straight guide (5).

5. A means according to claim 3 or 4, characterised in that the swivel arm (9) is mounted for rotation around a horizontal axis (10) and the angle of rotation is detectable, and the actuating arm (11) is mounted for rotation around a vertical axis (12).

6. A means according to any of claims 3 to 5, characterised in that the axis of rotation (10) of the swivel arm (9) is in line with the axes of rotation of the bonnet to be actuated.

7. A means according to any of the preceding claims, characterised in that the receiving device (16) comprises a lug (17) and an abutment stirrup (18) which cooperate with the movably mounted pins (14, 15).

8. A means according to any of the preceding claims, characterised in that the abutment (lever 23) comprises a lever (23) mounted for pivoting around a horizontal axis (22) and having a starting position which lies in a plane substantially perpendicular to the direction of motion of the body.

9. A means according to claim 8, characterised in that the angle through which the lever (23) pivots is detectable by a control device.

10. A means according to any of the preceding claims, characterised in that the drive of the handling device (1) has a higher speed than the drive of the conveyor (26).

11. Means according to any of the preceding claims, characterised in that the drive is a pneumatic cylinder-piston unit (7).

**Revendications**

1. Procédé de déplacement de capots de carrosseries automobiles (3), qui sont disposées sur un dispositif de transport (26) et déplacées par celui-ci le long d'un parcours de translation déterminé, en particulier des chaînes de peinture, d'après lequel les capots sont assurés contre une fermeture complète sur les carrosseries amenées et d'après lequel un dispositif de manipulation (1), disposé en dehors du dispositif de transport, est entraîné parallèlement au dispositif de transport, le même dispositif de manipulation étant ramené en sa position de départ après l'achèvement du mouvement de pivotement des capots, caractérisé en ce que le dispositif de manipulation est déplacé à une plus grande vitesse que le dispositif de transport au moyen d'un entraînement séparé, en ce qu'il est prévu pour la synchronisation des vitesses du dispositif de transport et du dispositif de manipulation des butées (23) et des contre-butées (24), qui empêchent un dépassement de la carrosserie par le dispositif de manipulation, en ce que la position du capot est interrogée, puis le capot est saisi et basculé dans son autre position finale après le relâchement éventuel du dispositif d'arrêt.

2. Procédé selon la revendication 1, caractérisé en ce que la position en hauteur de la carrosserie (3) amenée sur le dispositif de transport (26) est enregistrée avant la synchronisation des vitesses.

3. Dispositif pour l'ouverture et/ou la fermeture de capots de carrosseries automobiles (3), qui sont fixées sur une traverse, qui est déplacée de manière continue par un dispositif de transport, au moyen duquel les capots sont bloqués par des butées (27) empêchant leur fermeture complète, avec un dispositif de manipulation (1) disposé déplaçable en dehors du parcours de translation de la carrosserie automobile (3), sur lequel le dispositif de manipulation (1) porte un bras pivotant (9) monté mobile en rotation, à l'extrémité libre duquel est prévu un bras de manœuvre (11) monté pivotant, à l'extrémité duquel sont prévus des dispositifs de maintien (dispositif de série 13), caractérisé en ce que le dispositif de manipulation (1) présente un entraînement indépendant du dispositif de transport (26) dont la vitesse de déplacement est adaptée au moyen d'une butée (levier 23) et d'une contre-butée (24) à la vitesse du dispositif de transport (26), en ce que le bras de manœuvre (11) est monté basculable en direction longitudinale et présente comme dispositif de maintien deux tiges (14, 15), dont l'une au moins est déplaçable longitudinalement et qui sont associées à un dispositif de réception disposé sur le capot.

4. Dispositif selon la revendication 3, caractérisé en ce que le dispositif de manipulation (1) est constitué par un chariot (6) mobile sur une glissière (5).

5. Dispositif selon la revendication 3 ou 4, caractérisé en ce que le bras pivotant (9) est monté mobile en rotation autour d'un axe horizontal et en ce que le parcours de rotation est enregistrable, en ce que le bras de manœuvre (11) est monté mobile en rotation sur un axe vertical (12).

6. Dispositif selon l'une des revendications 3 à 5, caractérisé en ce que l'axe de rotation (10) du bras pivotant (9) se trouve dans le prolongement des axes de rotation du capot à actionner.

7. Dispositif selon l'une des revendications qui précèdent, caractérisé en ce que le dispositif de réception (16) est constitué par un anneau (17) avec un étrier de butée (18) qui sont associés aux tiges (14, 15) montées déplaçables.

8. Dispositif selon l'une des revendications qui précèdent, caractérisé en ce que la butée (levier 23) est constituée par un levier (23) monté pivotant sur un axe horizontal (22), dont la position de départ se trouve dans un plan presque perpendiculaire à la direction de déplacement de la carrosserie.

9. Dispositif selon la revendication 8, caractérisé en ce que l'angle de pivotement du levier est détectable par un dispositif de commande.

10. Dispositif selon l'une des revendications qui précèdent, caractérisé en ce que l'entraînement du dispositif de manutention présente une vitesse supérieure à celle du dispositif de transport (26).

11. Dispositif selon l'une des revendications qui précèdent, caractérisé en ce que l'entraînement est une unité à piston-vérin (7) actionnable pneumatiquement.

Fig. 1

Fig. 2a

Fig. 2b

Fig. 3b          Fig. 3a

I. Grundstellung

Fig. 4a

22
23
24

II Überfahren

Fig. 4b

23
22

III. Andocken

24
23
22

Fig 4c

# Fig. 5a

# Fig. 5b

Fig 6a

17
18
51°
16
3

Fig. 6b

14
13
15
3